# EUROPEAN PATENT SPECIFICATION

(11) **EP 3 325 579 B1**
(45) Date of publication and mention of the grant of the patent: **18.09.2019**
(21) Application number: 16739491.5
(22) Date of filing: 18.07.2016
(51) Int. Cl.: C10L 1/32, B01F 17/00

(54) **EMULSIFYING COMPOSITIONS FOR HEAVY FUEL OILS AND WATER MICROEMULSIONS OBTAINED THEREFROM.**
EMULGIERENDE ZUSAMMENSETZUNG FÜR SCHWERÖLE UND DARAUS GEWONNENE WASSERMIKROEMULSIONEN
COMPOSITIONS ÉMULSIFIANTES POUR MAZOUTS LOURDS ET MICRO-ÉMULSIONS AQUEUSES OBTENUES À PARTIR DE CES DERNIÈRES

(30) Priority: 23.07.2015 IT UB20152442
(43) Date of publication of application: 30.05.2018
(73) Proprietor: Eme International Limited, St Julians PTM 01 (MT)
(72) Inventor: FUMAGALLI, Marco Luigi, 23889 Lecco (IT)
(74) Representative: Fraire, Cristina
(86) International application number: PCT/EP2016/067066
(87) International publication number: WO 2017/013071

(56) References cited:
- JP-A- S5 380 406
- JP-A- S6 317 960
- US-A- 5 362 762
- US-A1- 2005 090 565
- US-A1- 2007 087 104
- US-A1- 2011 117 019

## Description

### Field of the invention

The present invention relates to a water in heavy fuel oil micro-emulsion, in particular to a micro-emulsion for use in stationary engines for the production of steam for industrial uses or for generating electricity in big power stations. This micro-emulsion is endowed with a long shelf-life and, compared with conventional heavy fuel oils, provides for a reduction in combustion-generated pollutants and a comparable engine out-put.

### Background of the invention

The Heavy Fuel Oils (HFOs) category includes both finished products, namely residual fuels, and the primary refinery streams from which they are blended.

The present invention specifically related to residual fuel oils, namely low-grade fuels primarily used in industrial boilers and other direct source heating applications (e.g., blast furnaces) and as a principal fuel for large heavy fuel oil stationary engines. The residual fuels are products that consist primarily of the residuum of the refining process after virtually all of the higher quality hydrocarbons have been distilled, cracked, or catalytically removed from crude oil feedstock. Historically, these residual fuels were based on residuals from atmospheric distillation. However, the increasing demand for transportation fuels such as gasoline, kerosene and diesel, has led to an increased value for the atmospheric residuum as a feedstock for vacuum distillation and for cracking processes. As a consequence, most heavy fuel oils are currently based on vacuum residuum and residua from thermal and catalytic cracking operations (CONCAWE, 1998). These high viscosity residual streams may in turn be "cut" with lower quality, lighter weight distillates to produce a finished residual heavy oil of a specified viscosity. The exact blend used for a specific residual fuel is determined largely by the desired viscosity of the finished fuel and specifications (ASTM, 2002).

Members of the residual oils category are a diverse group of substances that encompass hydrocarbons with a wide range of molecular weights, with carbon numbers ranging from C₇ to C₅₀ and boiling points between 250 - 1112 °F (121 to 600 °C) [Concawe, 1998] but higher and lower boiling blending components may be present depending on either the manufacturing processes or the technical requirements of the final product. Typically residual heavy oils are C₂₀ to C₅₀ with the low carbon numbers and boiling temperatures being associated with lighter weight "cutter" streams (CONCAWE, 1998). All the category members are complex substances, containing variable amounts of alkanes, cycloalkanes, aromatics, olefins, asphaltenes, and hetero-molecules containing sulfur, oxygen, nitrogen and organo-metals. Because they are complex substances composed of relatively high molecular weight compounds, the materials in this category are difficult to characterize in detail. Consequently, they are typically not defined by detailed compositional information but instead by process history, physical properties, and product use specifications.

Different organizations may use different parameters and may have different numerical specifications for fuel grades. Based on viscosity, ASTM D396 classifies heavy fuel oils as oils number 4 to 6.In general, the boiling point and carbon chain length of the fuel increases with fuel oil number; the higher the molecular weight of the oil's component, the higher the level of polyaromatic compounds, polycycloparaffins and hetero-atoms (N, O, S and metals) increase, and the lower the level of paraffins; viscosity also increases with number and the heaviest oil has to be heated to get it to flow. Price usually decreases as the fuel number increases.

In the European Union the Engler degree is generally used to classify fuels: heavy fuel oils are oils having a viscosity greater than 12° Engler at 50°C.

Since heavy fuel oils generate high calory and are relatively inexpensive, a large amount of heavy fuel oil is consumed all over the world for facilities in various industries including stationary combustion for the production of steam for industrial uses or for generating electricity. Other uses includes large scale heating facilities and large engines.

Nevertheless, the heavy fuel oils are very difficult to handle and use as fuels because are oleaginous, viscous, high boiling materials which do not flow easily and can cause problems in handling, atomization, etc., as well as problems such as the clogging of the pipework and other components of combustion boilers. Moreover, when such heavy fuel oils are burnt, a large volume of pollutants, such as, sulphur oxides, nitrogen oxides, carbon monoxide, soot and dust are generated. If no effective antipollution countermeasure is taken, these pollutants can contaminate the environment and pose a serious threat to the ecological system.

Even with properly maintained equipment of the latest design, substantial amounts of unburned carbon and other products of incomplete combustion are emitted. Heavy oils are typically atomized to enhance burning, but the droplets often burn incompletely. One way to improve combustion is to improve atomization, decreasing the heavy oil droplet size entering the flame front, allowing a smaller droplet to burn out completely during the limited time allowed for combustion.

Another way to improve combustion is to introduce tiny water droplets into the oil in the form of an emulsion. These water droplets are vaporized to steam as the oil droplet starts to burn. The steam produced inside the oil droplet shatters it into many smaller droplets. A typical oil droplet is on the order of 50-100 microns in diameter and it has been found that water droplets in the range of 2-10 microns are very effective and gross water contents of 5-15 % wt or so in the fuel provide enough energy to shatter most or almost all the droplets and drastically reduce particulate emissions. NOₓ emissions are usually reduced somewhat as well due to the fact that peak flame temperature is reduced slightly leading to a reduction in thermal NOₓ formation. This technology allows not only a reduction in pollution combustion residues but also an increase in fuel efficiency and therefore a reduction in greenhouse gas emissions.

Water and fuel oil emulsions have been often discussed in the literature, but there are many shortcomings in the systems useful for their production. Particularly in case of water in heavy fuel oil emulsions, the general process of making these emulsions is in need of improvement in terms of providing additional stability of the emulsion, reduction in combustion-generated pollutants and efficient engine out-put. Moreover, the emulsifiers/stabilizers used as additive to stabilize the emulsion have to be environmentally compatible.

As a matter of fact, one problem of the emulsion is that chemical stabilizers are needed to keep the water in suspension and prevent the formation of free water on the bottom of the storage tank if the emulsion is meant to be stored before use or transported to a secondary location for combustion. The equipment required to make a heavy oil emulsion is rather expensive and these emulsions are frequently made in a single location for distribution to end user sites some distance away.

Emulsion stabilizers in commercial use today are generally surfactants designed to match the hydrophilic-lipophilic balance (HLB) requirements of a heavy oil to reduce the surface tension at the oil-water interface and form a stable emulsion. These are both relatively expensive and are subject to failure when the HLB requirement of the oil changes and, because these droplets have almost no surface tension, they coalesce readily and form a water layer.

U.S. Patent Nos. 4249554, 4776977, 4923483 and 5024676 and Japanese Patent Publication-A No. 3-97,788 have proposed heavy fuel emulsions employing nonionic and/or ionic surfactants.

UK patent application 2276175 discloses an oil-in-water emulsion composition comprising (a) a heavy oil, (b) water, (c) surfactant and (d) at least one component selected from water-soluble compounds having two or more hydroxyl groups in the molecule, monohydric alcohols having 6 or more carbon atoms, and mixtures thereof, e.g. a glycerol or a glycol, a saccharide and C₁₂-C₂₄ mono-ols.

The International patent application WO2005/044958 corresponding to US2005/090565 discloses an emulsifying composition comprising a stabilizer, such as tannic acid; that composition, formulated without peroxides or terpene hydrocarbons, permit a stable water-in-oil emulsification of a mixture of heavy oils and decant oils.

US 2007/087104 discloses microemulsions which are effective for incorporating water-insoluble components into aqueous-based food and beverage compositions or water-soluble components into lipid-based food compositions; this document does not describe nor teach a saccharide-based ester selected from gallotannins, tannic acid, red gum and saponin.

JP S5380406 discloses a fuel oils surfactant obtained by ester interchange reaction of fats with a polyol mixture containing sugar; this document does not describe nor teach a saccharide-based ester selected from gallotannins, tannic acid, red gum and saponin.

US 5362762 discloses a surfactant systems for an emulsion polymerization process to manufacture low density porous crosslinked polymeric materials; this document does not describe nor teach a saccharide-based ester selected from gallotannins, tannic acid, red gum and saponin.

Altought the compositions disclosed in the above noted patent applications represent an improvement over the prior art compositions with respect to the stability of the emulsion and to the reduction of particulate and nitrogen oxide emitted in the exhaust gas, there is still a need for a system and additives for an effective emulsification of residual heavy fuel oils with water.

The Applicant has surprisingly found a specific emulsifying composition for water-in-oil emulsification of pure heavy fuel oil or mixtures containing mainly heavy fuel oil; such composition provides for a more homogeneous micro-emulsions with excellent shelf-life, reduction in combustion-generated pollutants and efficient out-put, even with a high water content. Moreover, the emulsifying composition of the invention has very low environmental impact.

### Summary

It is thus a first object of the present invention an emulsifying composition comprising:
(i) at least one saccharide-based ester at a concentration of from about 30.0% to about 50.0% of the weight of the composition,
(ii) at least one surfactant at the concentration of from about 2.0% to about 5.0% of the weight of the composition and
(iiia) at least one peroxide or (iiib) a mixture of terpene hydrocarbons at the concentration of from about 2.0% to about 7.0% of the weight of the composition wherein the saccharide-based ester is selected from: gallotannins, tannic acid, red gum and saponin.

It is a second object of the present invention a micro-emulsion comprising at least
a) from 4.0 to 40.0 % by weight of water,
b) the emulsifying composition according to the first object, preferably in amount of at most 1.1% by weight,
c) and heavy fuel oil to make it up to 100%.

It is a third object of the present invention a process for the manufacture the micro-emulsion comprising
- feeding heavy fuel oil in amount from 96.0 to 60.0 % by weight with respect to the total weight of the final micro-emulsion into a mixing device;
- feeding the emulsifying composition according to the first object of the present invention, preferably in amount of at most 1.1% by weight with respect to the total weight of the final micro-emulsion, into said mixing device;
- feeding water in amount from 4.0 to 40.0 % by weight with respect to the total weight of the final micro-emulsion into said mixing device;
- feeding a mixing tank with a batch obtained in said mixing device, the batch comprising said heavy fuel oil, said emulsifying composition and said water.

It is a fourth object of the present invention the use of the micro-emulsion according to the second object, as fuel preferably as fuel for industrial boilers and other direct source heating applications as well as for heavy fuel oil stationary engines.

### Definitions

As used herein, with the expressions "heavy fuel oil", "heavy oil", "heavy fuel", "residual fuel oil", "residual oil", and "residual fuel", we mean the products that consist primarily of the residuum of the refining process after virtually all of the higher quality hydrocarbons have been removed from crude oil feedstock. With the above expressions as used herein, both pure fuel oil and mixtures containing mainly fuel oil are meant. Among the heavy fuel oils that can be utilized more effectively because of the invention are fuel oils classified as number 4 to 6 according with ASTM D396 as well as those having a viscosity value higher than 12° Engler at 50°C.

With the term "HLB" hydrophilic-lipophilic balance is meant. HLB is an empirical value based on the relative percentage of the hydrophilic to the lipophilic moieties in a surfactant molecule and it has an arbitrary scale of 1 - 18.

With the sentence "absence of a visible separated aqueous phase" it is meant that after centrifugation according to UNICHIM MU 1548 of the micro-emulsion, there is no separated water visible with the naked eye at the bottom of the test tube.

With the term "Span" a sorbitan alkyl ester is meant
With the term "Tween" a polyethoxylated sorbitan alkyl ester is meant.

### Description of drawings

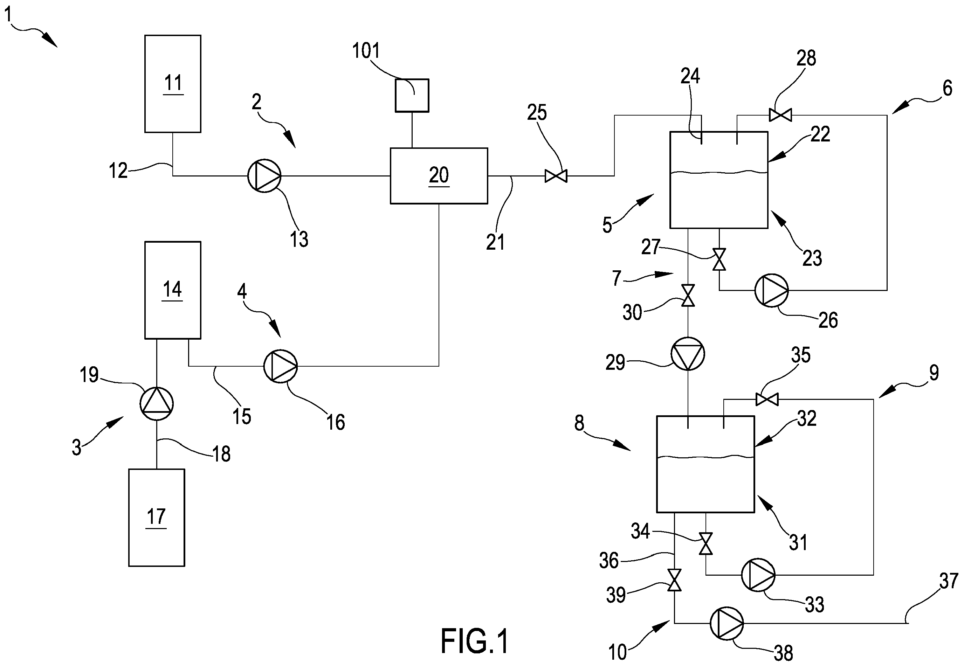

Figure 1 is a schematic view of the apparatus for preparing a water/heavy fuel oil micro-emulsion according to the invention.

### Detailed description

The first object of the present invention an emulsifying composition comprising:
(i) at least one saccharide-based ester at a concentration of from about 30.0% to about 50.0% of the weight of the composition,
(ii) at least one surfactant at the concentration of from about 2.0% to about 5.0% of the weight of the composition, and
(iiia) at least one peroxide or (iiib) a mixture of terpene hydrocarbons
at the concentration of from about 2.0% to about 7.0% of the weight of the composition wherein the saccharide-based ester is selected from: gallotannins, tannic, acid, red gum and saponin.

Preferably, one or more of the following features taken alone or in combination, characterize the emulsifying composition of the present invention.

The percentages by weight of the emulsifying composition components are referred to the total weight of the emulsifying composition.

At least one solvent is present in the composition as required to 100% of the weight of the composition. Solvents suitable for use in the present invention are water and/or polar solvents such as alcohols and the like. Of these, the most preferred solvent is water based both on a cost and a product handling hazard perspective.

Saccharide esters suitable for use in the present invention are gallotannins, tannic acid, red gum, saponin and the like. Preferred saccharides are those including esters of functionalities with aromatic groups. Also preferably, the saccharides of the invention will be predominantly from natural sources as compared to synthesized ones and can be in recovered impure form. HLB values of the saccharide esters will preferably be consistent with water solubility, e.g., greater than about 10.

Tannic acid is preferred and is also referred to as gallotannic acid, and can be derived by the extraction of nutgalls with water, desirably with alcohol. Tannic acid, (gallotannic acid) is an astringent vegetable product found in a wide variety of plants. Sources include the bark of oak, hemlock, chestnut, and mangrove; the leaves of certain sumacs; and plant galls. Tannin is also present in tea, coffee, and walnuts. A solution of tannic acid can be obtained from one of these natural sources by extraction with hot water. In particular, gallotannic acid can be obtained from plant gall. It is available commercially as a solid. Tannin varies somewhat in composition, having the approximate empirical formula C₇₆H₅₂0₄₆. Tannic acid is a colorless to pale yellow solid. It is believed to be a glucoside in which each of the five hydroxyl groups of the glucose molecule is esterified with a molecule of digallic acid. It is suitable in the form of a polysaccharide esterified with trihydroxybenzoic acid (C₆(OH)₃COOH). In its preferred form, tannic acid is available as a material of commerce and can contain various impurities depending on source and extent of purification. Derivatives of tannic acid, such as tannoform, prepared by condensing 2 moles of tannin with 1 mole of HCHO may also be used. Compositions like this and equivalents, are suitable as they are or with suitable solvents or vehicles where insoluble in water but soluble in alcohols.

The gallotannins and their equivalents are materials of commerce of slightly variable composition that are available from many suppliers in commercial forms used for other purposes. The cost of these materials ranges considerably depending on purity and other factors. We have been able to successfully use the less expensive grades of these materials as emulsion stabilizers indicating that the normal commercial concerns requiring high purity materials are not important in securing emulsion stabilization capability.

Saponin and its derivatives will herein be referred to collectively as saponin, which in its preferred form is a polysaccharide esterified with a triterpene. Red gum is useful in any of its commercial forms. It is also known as eucalyptus gum and contains 45% kino-tannic acid, kino-red, glucoside, catechol, pyrocatecheol. It is, therefore, very similar to tannic acid. In a preferred form, red gum is available as an ester of a polydsaccharide and hydroxybenzoic acid and other components in amounts which do not inhibit the functionality of the red gum as a stabilizer of the invention.

Synthetic products are not fully ruled out, as products such as Glucopon branded additives are effective: polysaccharide/Cs - C₁₀ ethers. These materials are artificial reaction products with short chain addition groups. Polyacrylic acids and acrylamide may also be present in these materials, but it is unknown how essential the acrylic components are. Exemplary of these is Glucopon 220UP, which is part of a small family of similar compounds by Henkel that are not mixtures with other anionic and nonionic surfactants. Among these are glucopon 225, 225DK, 425, 425N, 425UP, 600, 600UP, 625, 625FE and 625 UP. All are C₈-C₁₂ maximum ether chain length. The criteria above would eliminate Glucopon AV100, AV120 and LD 45.

Preferably the saccharide esters is present at the concentration of from about 30.0 to about 50.0% of the weight of the composition, more preferably from about 38.0 to about 47.0% of the weight of the composition.

Surfactants suitable for use in the present invention includes nonionic surfactants, anionic surfactants, cationic surfactants and amphoteric surfactants. In the present invention, although at least one surfactant selected from among those described above may be used, the use of a nonionic surfactant is preferable and the combined use of a nonionic surfactant with an anionic surfactant is still more preferable.

Examples of nonionic surfactants include lipophilic nonionic surfactant, having HLB lower than 7 and hydrophilic non-ionic surfactant having HLB higher than 10.

Preferably, the lipophilic nonionic surfactant is selected among sorbitan alkyl esters (Spans), fatty alcohols and their polyethoxylated deriatives, polyethoxylated fatty acid esters, glycerol esters and their admixtures, more preferably selected among sorbitan alkyl esters.

Preferably, the lipophilic nonionic surfactant is present at the concentration of from about 2.0 to about 4.0 % , more preferably from about 2.5 to about 3.1% of the weight of the composition.

Preferably the lipophilic nonionic surfactant has a HLB lower than 6.0, more preferably lower than 5.0 Preferably the lipophilic nonionic surfactant has a HLB higher than 1.5, preferably higher than 2.0. More preferably the lipophilic nonionic surfactant is sorbitan monostearate.

Optionally, hydrophilic nonionic surfactant may be present; suitable hydrophilic nonionic surfactants are selected among polyoxyethlyene derivatives of sorbitan alkyl esters Tweens, ethoxylated fatty alcohol, polyethoxylated fatty acid esters, glycerol esters and their admixtures, more preferably selected among polyoxyethlyene derivatives of sorbitan alkyl esters (Tweens).

If present, the further hydrophilic non-ionic surfactant is present at the concentration from about 1.0 to about 2.0% of the weight of the composition; preferably, the hydrophilic non-ionic surfactant has a HLB higher than 10.5; preferably, the hydrophilic non-ionic surfactant has a HLB lower than 12.0, preferably between 10.5 and 11.5.

Suitable anionic surfactants are selected among alkane or alkene fatty acid or a salt thereof, organic sulfates, sulfonates, phosphates and carboxylates salts and their mixture; preferred are C₄-C₁₈ alkane or alkene fatty acid or a salt thereof. Preferably the anionic surfactant is present at the concentration of from about 0.5 to about 1.5 % , more preferably from about 0.8 to about 1.2% of the weight of the composition. More preferably the anionic surfactant is dodecanoic acid.

Optionally, an amphoteric surfactants may be present; suitable amphoteric surfactants are selected from cations of primary, secondary, tertiary amines or quaternary ammonium salts, and as anions sulfonates, phosphates, carboxylates and their combinations such as sultaines, betaines, phospholipids with a quaternary ammonium group and their admixtures. Preferably, the amphoteric surfactant is selected among phospholipids with a quaternary ammonium group such as phosphatidylcholine or lecitine, and their admixtures. If present, the amphoteric surfactant is present at the concentration from about 1.0 to about 2.0% of the weight of the composition.

Preferably, the surfactant present in the emulsifying composition of the invention comprises a lipophilic nonionic surfactant at the concentration of from about 2.0 to about 4.0 % , more preferably from about 2.5 to about 3.1% of the weight of the composition and an anionic surfactant at the concentration of from about 0.5 to about 1.5 %, more preferably from about 0.8 to about 1.2% of the weight of the composition.

More preferably, the surfactant present in the emulsifying composition of the invention comprises sorbitan monostearate at the concentration of from about 2.0 to about 4.0 % , more preferably from about 2.5 to about 3.1% of the weight of the composition and dodecanoic acid at the concentration of from about 0.5 to about 1.5 %, more preferably from about 0.8 to about 1.2% of the weight of the composition.

Peroxides suitable for use in the present invention are selected from, but not limited to, the group comprising hydrogen peroxide, peroxymonosulfuric acid (H₂SO₅), dibenzoyl peroxide and di-tert-butyl peroxide. Preferably, the peroxide is selected among hydrogen peroxide, di-tert-butyl peroxide and a mixture thereof.

Preferably the hydrogen peroxide is from about 30.0 to about 55.0% by volume, more preferably is about 50% by volume. Preferably the hydrogen peroxide is present at the concentration from about 2.5 to about 3.5% of the weight of the composition and di-tert-butyl peroxide is present at the concentration from about 0.3% to about 2.5% of the weight of the composition; more preferably hydrogen peroxide is present at the concentration of about 3.0% of the weight of the composition and di-tert-butyl peroxide at the concentration of from about 0.5% to about 2.0% of the weight of the composition.

A suitable mixture of terpene hydrocanbons for use in the present invention is turpentine. Turpentine (also called spirit of turpentine, oil of turpentine, wood turpentine and colloquially turps) is a fluid obtained by the distillation of resin obtained from live trees, mainly pines. Turpentine is composed of terpenes, mainly the monoterpenes alpha-pinene and beta-pinene with lesser amounts of carene, camphene, dipentene, and terpinolene.

Preferably turpentine is present at the concentration from about 2.0 to about 7% of the weight of the composition.

The emulsifying composition may further comprise one or more additives commonly used in the field of water in oil fuel micro-emulsions, such as for instance anti-freezing agents, octane boosters, lubricants, anti-foam, anti-corrosion agents, adjuvants and others.

In particular, the present emulsifying composition preferably further comprises one or more of the following additives:
(iv) at least one antifreezing agent,
(v) at least one octane booster,
(vi) at least one thiol,
   and/or
(vii)at least one preservative.

Antifreezing agents suitable for use in the present invention are selected from, but not limited to, the group comprising cyclic ethers, alcohols and glycols and in an amount effective to prevent freezing or precipitation of the additive composition. Preferred antifreezing agents are 1,3-dioxolane, tetrahydrofurane, diclorobenzyl alcohol and 1,2-dimethoxy ethane, ethylene glycol, propylene glycol, glycerol and their admixtures. In a preferred form, from about 5.0 to 25.0% ethylene glycol, e.g., about 20.0% ethylene glycol is employed.

Octane boosters suitable for use in the present invention are selected from ammonium nitrate, 2-ethylhexyl nitrate and tert-butyl alcohol; preferably the at least one octane booster is present at the concentration of from about 0.3 to about 1.5%, more preferably from about 0.5 to about 0.9% of the weight of the composition; preferably the at least one octane booster is ammonium nitrate.

Thiols suitable for use in the present invention are selected from straight or branched C₁-C₂₀ alkyl thiols, such as methanethiol, ethanethiol, propanethiol, etc.; preferably the at least one thiol is present at the concentration of from about 1.0 to about 5.0% of the weight of the composition, more preferably from about 1.5 to about 3.0 of the weight of the composition; preferably the at least one thiol is ethanethiol with purity 97%.

Preservatives suitable for use in the present invention are selected from, but not limited to, the group comprising formaldehyde, glutaraldehyde and other such agents, at effective concentrations, e.g., less than about 0.1%, e.g., about 0.05%.

In one embodiment, the present emulsifying composition comprises at least:
(i) tannic acid at a concentration of from about 30.0 to about 50.0% of the weight of the composition,
(ii) sorbitan monostearate at the concentration of from about 2.0% to about 4.0% of the weight of the composition, and dodecanoic acid at the concentration of from about 0.5% to about 1.5% of the weight of the composition, and
(iiia) hydrogen peroxide at 50% by volume at the concentration of from about 2.5 to about 3.5% of the weight of the composition and di-tert-butyl peroxide at the concentration of from about 0.3% to about 2.5% of the weight of the composition.

In one embodiment, the present emulsifying composition comprises at least:
(i) tannic acid at a concentration of from about 38.0% to about 47.0% of the weight of the composition,
(ii) sorbitan monostearate at the concentration of from about 2.5% to about 3.1% of the weight of the composition, and dodecanoic acid at the concentration of from about 0.8% to about 1.2% of the weight of the composition,
(iiia) hydrogen peroxide at 50% by volume at the concentration of about 3.0% of the weight of the composition and di-tert-butyl peroxide at the concentration of from about 0.5% to about 2.0% of the weight of the composition,
(iv) ethylene glycol at the concentration of about 20.0% of the weight of the composition
(v) ammonium nitrate at the concentration of from about 0.5% to about 0.9% of the weight of the composition,
(vi) ethanethiol at the concentration of from about 1.5% to about 3.0% of the weight of the composition,
   and
(vii) glutaraldehyde at the concentration of from about 0.05 to about 0.1% of the weight of the composition.

In one embodiment, the present emulsifying composition consists of:
(i) tannic acid at a concentration of from about 38.0% to about 47.0% of the weight of the composition,
(ii) sorbitan monostearate at the concentration of from about 2.5% to about 3.1% of the weight of the composition, and dodecanoic acid at the concentration of from about 0.8% to about 1.2% of the weight of the composition,
(iiia) hydrogen peroxide at 50% by volume at the concentration of about 3.0% of the weight of the composition and di-tert-butyl peroxide at the concentration of from about 0.5% to about 2.0% of the weight of the composition,
(iv) ethylene glycol agent at the concentration of about 20.0% of the weight of the composition
(v) ammonium nitrate at the concentration of from about 0.5% to about 0.9% of the weight of the composition,
(vi) a ethanethiol at the concentration of from about 1.5% to about 3.0% of the weight of the composition,
   and
(vii) glutaraldehyde at the concentration of from about 0.05 to about 0.1% of the weight of the composition.

Preferably, the present emulsifying composition is characterized by an overall HLB value from about 2.9 to about 6.9, preferably from about 3.5 to about 5.5.

Advantageously the present emulsifying composition can be used to emulsify residual heavy oil fuels with water.

The present emulsifying composition may be manufactured by dissolving the saccharide-based ester with water and then adding the at least one surfactant, the resultant mixture is stirred at room temperature up to a homogenuous admixture was obtained. The other components may then be added under stirring at room temperature up to an homogeneous admixture is obtained.

The present emulsifying composition may be advantageously used for manufacturing a very stable, high water-content heavy oil fuel micro-emulsion.

The second object of the present invention is thus a micro-emulsion comprising
a) from 4.0 to 40.0 % by weight of water,
b) the emulsifying composition according to the first object, preferably in amount of at most 1.1% by weight, and
c) heavy fuel oil to make it up to 100%.

The percentages by weight of the above components are referred to the total weight of the final micro-emulsion.

The micro-emulsion according to the present invention, may be characterized by one or more of the following features, taken alone or in combination.

The present micro-emulsion comprises at least 4.0%, preferable at least 8.0%, more preferably at least 10.0% by weight of water; the present micro-emulsion comprises at most 40.0%, preferable at most 25.0%, more preferably at most 22.0% by weight of water; preferably, the present micro-emulsion comprises from 4.0 to 40.0%, more preferably from 8.0 to 22.0% of water with respect to the total weight of the final micro-emulsion..

Preferably, the present micro-emulsion for use as fuel for industrial boilers and other direct source heating applications comprises from 15.0 to 25.0%, preferably from 18.0% to 22.0% of water.

Water (a) can be any type of purified water, such as distilled, deionized or demineralized, tap or waste water; preferably is tap or waste water.

The present micro-emulsion comprises at least 0.4%, preferably at least 0.6%, at least 0.8% by weight of the emulsifying composition (b). However, it preferably comprises at most 1.1% , preferably at most 1% by weight of the emulsifying composition (b).

More preferably, the present micro-emulsion comprises from 0.4 to 1.1% by weight of the emulsifying composition (b). Most preferably, the present micro-emulsion comprises from 0.8 to 1.0% by weight of the emulsifying composition (b).

The micro-emulsion according to the present invention appears as a brownish uniform emulsion. The microemulsion according to the present invention complies with the UNICHIM MU 1548 regulation in term of sediment and visible free water after centrifugation.

The stability test according to UNICHIM MU 1548 evaluates the formation of a sediment by centrifugation according to a scale from 0 to 9 (from 0% to 9% by volume) and the separation of a visible aqueous layer (test score: passed if no separated water is detected; failed if at least a droplet of water is visible). The score of the present micro-emulsions in this test is a sediment below 1 % and a "passed" score as no aqueous droplet was visible.

The present micro-emulsion of water in heavy oil, especially when prepared according to the present process and even when comprising very low amounts of surfactants, shows long term stability under static conditions: for instance if left in a tank, without stirring for at least 4 months or more, no separation of aqueous phase is recordable. Furthermore, no aqueous phase separates under centrifugation (dynamic stability) according to UNICHIM 1548 test method.

With emulsion stables over time, it is intended that the water colloidal particles present in the heavy oil, are and remain uniformly dispersed in the continuous phase, for a period substantially longer with respect to the already known emulsions, even without any stirring. Furthermore, the present micro-emulsions not only do not separate when stored in a tank without any stirring after long storage periods, but also they do not coalesce under dynamic stability tests. The present micro-emulsions are thermodynamically very stable.

These stability characteristics are essential in case of emulsions to be used to supply industrial boilers, direct source heating applications or stationary engines, for which a storage period is expected during production (for example in large tanks), during shipping and distribution (for example in tank trucks and in depots of distribution facilities) and during final use.

In fact, the present micro-emulsions remain stable and score the maximum grade in the rather demanding test such UNICHIM MU 1548: even after prolonged centrifugation, a sediment lower than 1% and no visible free water have resulted.

The micro-emulsions according to the present invention show several advantages such as:
- excellent long term stability and increased shelf-life (no water separation in the tank);
- reduction of formation and emission of pollutants;
- improvement of combustion efficiency;
- high content of water;
- no boiler/engine modification required;
- lower costs of the production equipment;

Additional advantages of the present micro-emulsion are for instance:
- do not require additional lubricants in the combustion chamber (self-lubricant composition);
- reduction of corrosion and freezing events;
- versatility as a single type of emulsifying composition can be used to emulsify different heavy oil types;
- lower costs, as the emulsifying agents may be used in very low amounts.

The third object of the present invention is a process for the manufacture of a micro-emulsion according to the second object comprising:
- feeding heavy fuel oil in amount from 96.0 to 60.0 % by weight with respect to the total weight of the final micro-emulsion into a mixing device;
- feeding the emulsifying composition according to the first object of the present invention, preferably in amount of at most 1.1% by weight with respect to the total weight of the final micro-emulsion, into said mixing device;
- feeding water in amount from 4.0 to 40.0 % by weight with respect to the total weight of the final micro-emulsion into said mixing device;
- feeding a mixing tank with a batch obtained in said mixing device, the batch comprising said heavy fuel oil or said mixture containing mainly heavy fuel oil, said emulsifying composition and said water.

In an aspect according to the third object of the present invention, the emulsifying composition is fed into a water tank in order to form a pre-mix of water and emulsifying composition.

In another aspect the process further comprises feeding water and the emulsifying composition from the water tank into the mixing device.

In another aspect the process further comprises:
- recirculating the batch in the mixing tank through a recirculation conduit;
- discharging the fuel micro-emulsion batch.

In an aspect according to the preceding aspects, the recirculation step is carried out for a number of times comprised between 3 and 9, preferably 5 o 6 times.

In another aspect according to the preceding aspects, discharging the fuel micro-emulsion batch comprises feeding the fuel micro-emulsion batch from the mixing tank to a storage tank.

In an aspect according to the preceding aspects, the process further comprises:
- recirculating the fuel micro-emulsion batch in the storage tank through an additional recirculation conduit.

In an aspect according to the preceding aspect, the recirculation step of the fuel micro-emulsion batch is carried out continuously in the additional recirculation conduit.

Preferred apparatus, mixing device and process, for the manufacture of the present micro-emulsion, are described in WO2014/162281 to which we refer in its entirety for further details.

Most preferred apparatus, mixing device and process conditions for manufacturing the present micro-emulsion are disclosed in the co-pending Italian patent application 102015000037665 in the name of the same Applicant.

An apparatus comprises:
- at least one heavy fuel oil feeding unit;
- at least one emulsifying composition feeding unit;
- at least one water feeding unit;
- at least one mixing tank in fluid communication with said feeding units;
- a mixing device operatively connected to said mixing tank and disposed upstream of the mixing tank.

A mixing device comprises:
- at least one duct for a flow of liquid, said duct extending along a main development direction and presenting an inlet opening and an outlet nozzle, wherein the inlet opening comprises a first inlet for water with emulsifying composition and a second inlet for heavy fuel oil;
- a helix shaped rotor arranged in at least a portion of said duct and coaxial with the main development direction, said rotor being configured for defining a helix shaped advancement path for said liquid.

The co-pending patent application 102015000037665 provides a detailed description of at least one way of carrying out the present process, along with suitable apparatuses and mixing devices.

An apparatus for carrying out the microemulsion of invention is illustrated in the attached schematic figure 1. The apparatus for preparing a water/heavy fuel oil micro-emulsion is identified by reference numeral 1. The apparatus 1 comprises a heavy fuel oil feeding unit 2, an emulsifying composition feeding unit 3, a water feeding unit 4 and a mixing tank 5 provided with a recirculation conduit 6 and a discharge duct 7. The discharge duct 7 allows the mixing tank 5 to be in fluid communication with a storage tank 8. The storage tank 8 is provided with an additional recirculation conduit 9 and with an additional discharge duct 10.

The heavy fuel oil feeding unit 2 comprises a heavy fuel oil tank 11, a first conduit 12 having a first end connected to the heavy fuel oil tank 11 and a second end connected to the mixing tank 5. A first pump 13 is placed in the first conduit 12 to pump the heavy fuel oil from the respective tank 11 towards the mixing tank 5.

The water feeding unit 4 comprises a water tank 14 and a second conduit 15 having a first end connected to the water tank 14 and a second end connected to the mixing tank 5. A second pump 16 is placed in the second conduit 15.

The emulsifying composition feeding unit 3 comprises an emulsifying composition tank 17 and a third conduit 18 having a first end connected to the emulsifying composition tank 17 and a second end connected to the water tank 14. A third pump 19 is placed in the third conduit 18 to pump the emulsifying composition from the emulsifying composition tank 17 to the water tank 14. In other words, the water tank 14 is fed with emulsifying composition. Inside the water tank 14 water and emulsifying composition are mixed and in the second conduit 15 departing from the water tank 14 emulsifying composition and water flow. The second pump 16 pumps water and emulsifying composition from the water tank 14 towards the mixing tank 5. Heating elements, not shown, are operatively connected to the water tank 14 and/or to the second conduit 15 to heat the emulsifying composition and water. Further heating elements, not shown, are operatively connected to the emulsifying composition tank 17 and/or to the third conduit 18 to heat the emulsifying composition.

As shown in figure 1, the second conduit 15 is connected to the first conduit 13 at a connection point placed downstream of the first and second pumps 13, 16 and upstream of the mixing tank 5. A mixing device 20 is placed at the connection point. Downstream the mixing device 20 a common conduit 21 is present through which the batch comprising heavy fuel oil, emulsifying composition and water flow towards the mixing tank 5.

The mixing tank 5 presents an upper portion 22 and a bottom portion 23. The bottom portion 23 can be shaped like an hopper.

The common conduit 21 enters through an upper wall of the mixing tank 5 and a terminal end 24 of said common conduit 21 is located in the upper portion 22. A first valve 25 is placed in the common conduit 21 between the connection point and the mixing tank 5.

The recirculation conduit 6 presents a first end connected to the bottom portion 23 of said mixing tank 5 and a second end connected to the upper portion 22 of the mixing tank 5.

The first end of the recirculation conduit 6 can be the terminal end of the common conduit 21 disclosed above. A fourth pump 26 is located in the recirculation conduit 6 to pump the batch comprising water, emulsifying composition and heavy fuel oil from the bottom portion 23 of the mixing tank 5 to the upper portion 22 of the mixing tank 5. The recirculation conduit 6 further comprises a second valve 27 arranged between the mixing tank 5 and the fourth pump 26 and a third valve 28 arranged between the fourth pump 26 and the mixing tank 5.

The mixing tank 5 comprises heating elements (not shown) configured to heat the mixing tank 5 at a predetermined temperature, for example a temperature comprised between 40°C and 80°C, preferably between 50°C and 70°C. The mixing tank 5 further comprises thermal insulating elements (not shown) configured to maintain a predetermined temperature inside the mixing tank 5, for example comprised between 40°C and 80°C, preferably between 50°C and 70°C. Such a temperature, together with the recirculation via the recirculation conduit 6, helps the batch to get homogeneous and maintain its properties.

As previously said, a discharge duct 7 departs from the mixing tank 5. The discharge duct 7 has a first end connected to the mixing tank 5 and a second end connected to the storage tank 8.

A fifth pump 29 is located in the discharge duct 7, as well as a fourth valve 30. The fifth pump 29 is configured to pump the batch comprising water, emulsifying composition and heavy fuel oil from the mixing tank 5 to the storage tank 8. As illustrated in figure 1, the fourth valve 30 is located between the mixing tank 5 and the fifth pump 29.

The storage tank 8 is connected with the additional recirculation conduit 9. The additional recirculation conduit 9 has a first end connected to a bottom portion 31 of the storage tank 8 and a second end connected to an upper portion 32 of the storage tank 8.

A sixth pump 33 is located in the additional recirculation conduit 9 to pump the water/heavy fuel oil micro-emulsion from the bottom portion 31 of the storage tank 8 to the upper portion 32 of the storage tank 8. A fifth and a sixth valve 34, 35 are located in the additional recirculation conduit 9. The fifth valve 34 is located just downstream the storage tank 8 between the first end of the additional recirculation conduit 9 and the sixth pump 33, while the sixth valve 35 is located between the sixth pump 33 and the second end of the additional recirculation conduit 9.

The storage tank 8 comprises heating elements (not shown) configured to heat the storage tank 8 at a predetermined temperature, for example a temperature comprised between 40°C and 80°C, preferably between 50°C and 70°C. The storage tank 8 further comprises thermal insulating elements (not shown) configured to maintain a predetermined temperature inside the storage tank 8, for example comprised between 40°C and 80°C, preferably between 50°C and 70°C. Such a temperature, together with the recirculation via the additional recirculation conduit 9, helps the batch to get homogeneous and maintain its properties.

Downstream the storage tank 8, there is an additional discharge duct 10. The additional discharge duct 10 has a first end 36 connected to the bottom portion 31 of the storage tank 8 and a terminal end 37. A seventh pump 38 is disposed in the additional discharge duct 10 to pump the batch comprising water, emulsifying composition and heavy fuel oil from the first end 36 of the additional discharge duct 10 to its terminal end 37. Further, a seventh valve 39 is located in the additional discharge duct 10 upstream the seventh pump 38.

Mixing device 20 and a preferred process are also disclosed in the co-pending application 102015000037665.

This process, due to the peculiar mixing device and especially when the final admixture is recirculated continuously, furnishes high energy to the system and provides for small and finely dispersed water droplets. The resulting micro-emulsion is thus endowed with an excellent stability notwithstanding the relatively low amounts of surfactants therein incorporated.

It is a fourth object of the present invention the use of the micro-emulsion according to the second object, as fuel preferably as fuel for industrial boilers and other direct source heating applications as well as for heavy fuel oil stationary engines.

Preferably, the present micro-emulsion for use as fuel for industrial boilers and other direct source heating applications comprises from 15.0 to 25.0%, preferably from 18.0% to 22.0% of water.

Using the present micro-emulsions as fuel is particularly advantageous also from the environmental point of view. In fact, the combustion process is particularly clean and efficient, with low emissions and high efficiency.

With the aim to better illustrate the present invention, the following examples are now furnished.

### Examples

### Example 1: preparation of an emulsifying composition

An emulsifying composition according to the present invention was prepared with the following ingredients (all percentage by weight):
43.0 % tannic acid
2.8 % sorbitan monostearate
1.0 % dodecanoic acid
3.0% hydrogen peroxide at 50% by vol
1.2% di-tert-butyl peroxide
20.0% ethylene glycol
0.7% ammonium nitrate
2.2% ethanethiol
0.08% glutaraldheyde

To prepare 100 Kg of emulsifying composition according to the present invention tannic acid (43 Kg) was dissolved with water (20l) in a mixing tank, then sorbitan monostearate (2.8 Kg) and dodecanoic acid (1 Kg) were added, the resultant mixture was then stirred at room temperature up to a homogenuous admixture was obtained. The other components, namely hydrogen peroxide (2.61), di-tert-butyl peroxide (1.61), ethylene glycol (18l), ammonium nitrate (0.7 Kg), thiol (2.51), glutaraldheyde (0.08 I) and the remaining part of water (6 I) were then added and kept under stirring at room temperature up to a uniform dispersion was obtained.

### Example 2: preparation of a water in heavy fuel oil micro-emulsion

A water in heavy fuel oil micro-emulsion according to the present invention was prepared with the following ingredients:
a) 22.0% of waste water,
b) 77.5% of heavy fuel oil,
c) 0.5% of the emulsifying composition of Example 1.

Waste water (1100 l) was pre-mixed with the emulsifying composition (25 l) and then mixed with the heavy fuel oil (3875 l).

The water and the emulsifying composition were mixed in the water tank 14 and then were pumped by means of pump 16 into the mixing device 20 through a conduit 15. The pressure of fluid entering the mixing device 20 was of about 120 bar. Heavy fuel oil was pumped by means of pump 13 into the mixing device 20 through a conduit 12. In the mixing device 20, the emulsifying composition and the heavy fuel oil were heated by the heating elements to a controlled temperature of about 60°C. Then the batch comprising water, emulsifying composition and heavy fuel oil was sent to the mixing tank 5, the time required to fill the mixing tank 5 was of about 24 min.

At this stage, the valve 27 was opened and the pump 26 pumped the water/heavy fuel oil micro-emulsion in the recirculation conduit 6. Such a recirculation was carried out six times. The time required for performing this recirculation was of about 24 min (about 4 min for each loop). The pressure of fluid through the recirculation conduit 6 was of about 2 bar.

Then, the valve 27 was closed, the valve 30 was opened and the pump 29 was activated. The pump 29 pumped the micro-emulsion in the storage tank 8 through the discharge duct 7. When the micro-emulsion was in the storage tank 8, the valve 39 was closed, the valves 34, 35 were opened and the pump 33 was activated. The pump 33 pumped the micro-emulsion in the additional recirculation conduit 9. Such a recirculation step is carried out continuously, i.e. without interruption as long as the micro-emulsion is in the storage tank 8. The pressure of fluid through the additional recirculation conduit 9 was about 2 bar.

The micro-emulsion was extracted from the storage tank 8 through the additional discharge duct 10. In the extraction step, the fifth valve 34 was closed (no recirculation in the additional recirculation conduit) and the seventh pump 38 was activated.

The closure and opening of the valves 25, 27, 28, 30, 34, 35, 39 and the activation or deactivation of the pumps 13, 16, 19, 26, 29, 33, 38 were controlled by the control unit.

### Example 3: preparation of a water in heavy fuel oil micro-emulsion

Another micro-emulsion according to the invention comprising (a) 22.0% of waste water, (b) 77.0% of heavy fuel oil and (c) 1.0% of the emulsifying composition of Ex. 1 was prepared with the same procedure described in Example 2.

### Static Stability test

The micro-emulsions according to Examples 2 and 3 were stored in closed transparent vials without stirring, at room temperature, in the dark and visually inspected after 1, 2, 3, 4 and 5 months. No separated water was detectable in anyone of the samples.

### Dynamic Stability test

The w/o micro-emulsions of Examples 2 and 3 according to the present invention were subjected to the stability test as per UNICHIM MU 1548 standard method (w/o emulsions: assessment of free water and stability after centrifugation). This test evaluates emulsion stability in terms of sedimentation (percentage by volume of water-enriched emulsion) and water phase separation at the bottom of the test tube after centrifugation. The maximum score allowed by the current Italian fuel regulations for sedimentation is 9% v/v. All the samples according to the present invention, centrifuged at 4200 crf (centrifugal relative force), for 5 minutes, scored <1% in terms of sedimentation (0.5 ml of sediment) and passed the evaluation of separated visible free water (no free water was detected by visual inspection).

The w/o micro-emulsions of Examples 2 and 3 according to the present invention comply also with the European standard CWA 15145:2004.

### Gas flue emission and boiler efficiency

In order to evaluate the gas flue emission and the efficiency of the micro-emulsion of the present invention, test runs were conducted with a boiler.

The micro-emulsion tested had the following composition:
a) 22.0% of waste water,
b) 77.5% of heavy fuel oil,
c) 0.5% of the emulsifying composition of Example 1, and was prepared as described under Example 2.

The Plant type has the following characteristics:
Boiler: Biklim 450.000 Kcal
Burner: Riello press 60 for heavy fuel oil two stages Monarch HO 3.00 at 60°C
Nozzles: Monarch HO 3.00 at 60°C.

The Instrument used for the determination of gas emission and efficiency has the following characteristics:
EUROTRON ELline 6000, number series 75657 certified TUV in conformity with European EN 50378 part 2 for O₂, CO₂, NO/NOₓ, SO₂, °C and hPa; electrochemical sensor comply with EPA protocol or
equivalent (CTM-030 and CTM-034).

Boiler efficiency related to the boilers energy output to the boilers energy input can be expressed as: Boiler efficiency (%) = heat exported by the fluid (water, steam ..) / heat provided by the fuel x 100. Gas flue emission and efficiency data of the micro-emulsion of the present invention were evaluated and compared with those obtained with heavy fuel oil as such. Data are reported in Table 1.

**Table 1**

| Parameter | HFO as such (ref.) | | Micro-emulsion of EX. 2 | |
|---|---|---|---|---|
| | Measured O₂ in the fumes 5.4% | Calculated O₂ in the fumes 3% | Measured O₂ in the fumes 5.% | Calculated O₂ in the fumes 3% |
| | Fumes T 198,4 °C | | Fumes T 178.6 °C | |
| | Air T 30,4 °C | | Air T 40.8 °C | |
| CO2 | 11.7% | | 12.0% | |
| CO | 77 ppm | 89 ppm | 13 ppm | 15 ppm |
| NO | 306 ppm | 353 ppm | 189 ppm | 213 ppm |
| NOx | 315 ppm | 364 ppm | 195 ppm | 220 ppm |
| Efficiency | | 91.4% | | 93.1% |

The representative example of the micro-emulsion of the invention characterized by 22% of water and 0.5% of the emulsifying composition of the invention, has reconformed CO emission reduced by about 83% without any regulation to the burner and reconformed NOx emission reduced by about 40% without making significant adjustment to the burner.

The efficiency of the boiler was improved by about 2%.

Usually, in condition of use, HFO is heated before entering the boiler to reduce its viscosity.

The pre-heating temperature is also noteworthy, as in case of HFO as such was about 170°C while with the micro-emulsion of the invention the pre-heating temperature was about 120-130°C.

Furthermore, the micro-emulsion of the invention remained homogeneous and stable also when subjected to continuous temperatures changes, from about 30°C ambient temperature to about 130°C micro-emulsion temperature in the service tank returning from the burner.

This invention brings important advantages.

In fact, the micro-emulsion is homogeneous with excellent shelf-life, has reduced combustion-generated pollutants and efficient out-put, even with a high water content.

Moreover, the emulsifying composition of the invention has very low environmental impact.

## Claims

1. An emulsifying composition comprising:
(i) at least one saccharide-based ester at a concentration of from 30.0% to 50.0% of the weight of the composition,
(ii) at least one surfactant at the concentration of from 2.0% to 5.0% of the weight of the composition, and
(iiia) at least one peroxide or (IIIb) a mixture of terpene hydrocarbons at the concentration of from 2.0% to 7.0% of the weight of the composition
wherein the saccharide-based ester is selected from: gallotannins, tannic acid, red gum and saponin; preferably is tannic acid.

2. An emulsifying composition according to claim 1 wherein the at least one surfactant is a non-ionic surfactant, preferably a lipophilic non-ionic surfactant, more preferably is sorbitan monostearate.

3. An emulsifying composition according to claim 1 or 2 further comprising an anionic surfactant, preferably dodecanoic acid.

4. An emulsifying composition according to any of the previous claims comprising
(i) tannic acid at a concentration of from 30.0 to 50.0%, preferably from 38.0% to 47.0% of the weight of the composition,
(ii) sorbitan monostearate at the concentration of from 2.0% to 4.0%, preferably from 2.5% to 3.1% of the weight of the composition, and dodecanoic acid at the concentration of from 0.5% to 1.5%, preferably from 0.8% to 1.2% of the weight of the composition, and
(iiia) hydrogen peroxide at 50% by volume at the concentration of from 2.5 to 3.5%, preferably of 3.0% of the weight of the composition and di-tert-butyl peroxide at the concentration of from 0.3% to 2.5%, preferably from 0.5% to 2.0% of the weight of the composition.

5. An emulsifying composition according to any of the previous claims further comprising (iv) at least one antifreezing agent, preferably ethylene glycol, at the concentration of about 20% of the weight of the composition
(v) at least one octane booster, preferably ammonium nitrate, at the concentration of from 0.5% to 0.9% of the weight of the composition,
(vi) at least one thiol, preferably ethanethiol, at the concentration of from 1.5% to 3.0% of the weight of the composition,
and/or
(vii) a preservative, preferably glutaraldehyde, at the concentration of from 0.05 to 0.1% of the weight of the composition.

6. A micro-emulsion comprising
a) from 4.0 to 40.0 % by weight of water,
b) the emulsifying composition according to claim 1, preferably in amount of at most 1.1 % by weight, and
c) heavy fuel oil to make it up to 100%.

7. A micro-emulsion according to claim 6 comprising at least 4.0%, preferable at least 8.0%, more preferably at least 10.0% by weight of water; comprising at most 40.0%, preferable at most 25.0%, more preferably at most 22.0% by weight of water; preferably, comprising from 4.0 to 40.0%, more preferably from 8.0 to 22.0% of water with respect to the total weight of the final micro-emulsion.

8. A micro-emulsion according to claim 6 or 7 comprising at least 0.4%, preferably at least 0.6%, at least 0.8% by weight of the emulsifying composition (b); comprising at most 1.1% , preferably at most 1% by weight of the emulsifying composition (b); comprising from 0.4 to 1.1 % by weight of the emulsifying composition (b), preferably comprising from 0.8 to 1.0% by weight of the emulsifying composition (b).

9. A process for the manufacture of a micro-emulsion according to claim 6 comprising:
- feeding heavy fuel oil in amount from 96.0 to 60.0 % by weight with respect to the total weight of the final micro-emulsion into a mixing device;
- feeding the emulsifying composition as defined in claim 1 , preferably in amount of at most 1.1% by weight with respect to the total weight of the final micro-emulsion, into said mixing device;
- feeding water in amount from 4.0 to 40.0 % by weight with respect to the total weight of the final micro-emulsion into said mixing device;
- feeding a mixing tank with a batch obtained in said mixing device, the batch comprising said heavy fuel oil or said mixture containing mainly heavy fuel oil, said emulsifying composition and said water.

10. A process according to claim 9 further comprising
- recirculating the batch in the mixing tank through a recirculation conduit;
- discharging the fuel micro-emulsion batch.

11. A process according to claim 9 or 10 further comprising
recirculating the fuel micro-emulsion batch in the storage tank through an additional recirculation conduit.

12. Use of the micro-emulsion according to claim 6, as fuel preferably as fuel for industrial boilers and other direct source heating applications as well as for heavy fuel oil stationary engines.

## Patentansprüche

1. Emulgierende Zusammensetzung, umfassend:
(i) mindestens einen Ester auf Saccharidbasis in einer Konzentration von 30,0 % bis 50,0 % des Gewichts der Zusammensetzung,
(ii) mindestens ein Tensid in einer Konzentration von 2,0 % bis 5,0 % des Gewichts der Zusammensetzung und
(iiia) mindestens ein Peroxid oder (IIIb) eine Mischung von Terpenkohlenwasserstoffen in einer Konzentration von 2,0 % bis 7,0 % des Gewichts der Zusammensetzung,
wobei der Ester auf Saccharidbasis ausgewählt ist aus: Gallotanninen, Tanninsäure, rotem Gummi und Saponin; bevorzugt ist Tanninsäure.

2. Emulgierende Zusammensetzung nach Anspruch 1, wobei das mindestens eine Tensid ein nichtionisches Tensid ist, bevorzugt ein lipophiles nichtionisches Tensid, stärker bevorzugt ist Sorbitanmonostearat.

3. Emulgierende Zusammensetzung nach Anspruch 1 oder 2, ferner umfassend ein anionisches Tensid, bevorzugt Dodecansäure.

4. Emulgierende Zusammensetzung nach einem der vorhergehenden Ansprüche, umfassend
(i) Tanninsäure in einer Konzentration von 30,0 bis 50,0 %, bevorzugt von 38,0 % bis 47,0 % des Gewichts der Zusammensetzung,
(ii) Sorbitanmonostearat in einer Konzentration von 2,0 % bis 4,0 %, bevorzugt von 2,5 % bis 3,1 % des Gewichts der Zusammensetzung und Dodecansäure in einer Konzentration von 0,5 % bis 1,5 %, bevorzugt von 0,8 % bis 1,2 % des Gewichts der Zusammensetzung und
(iiia) 50 Vol.-% Wasserstoffperoxid in einer Konzentration von 2,5 bis 3,5 %, bevorzugt 3,0 % des Gewichts der Zusammensetzung und Ditertbutylperoxid in einer Konzentration von 0,3 % bis 2,5 %, bevorzugt von 0,5 % bis 2,0 % des Gewichts der Zusammensetzung.

5. Emulgierende Zusammensetzung nach einem der vorhergehenden Ansprüche, ferner umfassend
(iv) mindestens ein Gefrierschutzmittel, bevorzugt Ethylenglykol, in einer Konzentration von etwa 20 % des Gewichts der Zusammensetzung
(v) mindestens einen Octanverstärker, bevorzugt Ammoniumnitrat, in einer Konzentration von 0,5 % bis 0,9 % des Gewichts der Zusammensetzung
(vi) mindestens ein Thiol, bevorzugt Ethanthiol, in einer Konzentration von 1,5 % bis 3,0 % des Gewichts der Zusammensetzung,
und/oder
(vii) ein Konservierungsmittel, bevorzugt Glutaraldehyd, in einer Konzentration von 0,05 bis 0,1 % des Gewichts der Zusammensetzung.

6. Mikroemulsion, umfassend
a) 4,0 bis 40,0 Gew.-% Wasser,
b) die emulgierende Zusammensetzung nach Anspruch 1, bevorzugt in einer Menge von höchstens 1,1 Gew.-%, und
c) schweres Heizöl, um sie auf 100 % aufzufüllen.

7. Mikroemulsion nach Anspruch 6, umfassend mindestens 4,0 Gew.-%, bevorzugt mindestens 8,0 Gew.-%, stärker bevorzugt mindestens 10,0 Gew.-% Wasser; umfassend höchstens 40,0 Gew.-%, bevorzugt höchstens 25,0 Gew.-%, stärker bevorzugt höchstens 22,0 Gew.-% Wasser; bevorzugt, umfassend 4,0 bis 40,0 %, stärker bevorzugt 8,0 bis 22,0 % Wasser, bezogen auf das Gesamtgewicht der vollständigen Mikroemulsion.

8. Mikroemulsion nach Anspruch 6 oder 7, umfassend mindestens 0,4 Gew.-%, bevorzugt mindestens 0,6 Gew.-%, mindestens 0,8 Gew .-% der emulgierenden Zusammensetzung (b); umfassend höchstens 1,1 Gew.-%, bevorzugt höchstens 1 Gew.-% der emulgierenden Zusammensetzung (b); umfassend 0,4 bis 1,1 Gew.-% der emulgierenden Zusammensetzung (b), bevorzugt umfassend 0,8 bis 1,0 Gew.-% der emulgierenden Zusammensetzung (b).

9. Verfahren zur Herstellung einer Mikroemulsion nach Anspruch 6, umfassend:
- Einspeisen von schwerem Heizöl in einer Menge von 96,0 bis 60,0 Gew.-%, bezogen auf das Gesamtgewicht der vollständigen Mikroemulsion, in eine Mischvorrichtung;
- Einspeisen der emulgierenden Zusammensetzung, wie in Anspruch 1 definiert, bevorzugt in einer Menge von höchstens 1,1 Gew.-%, bezogen auf das Gesamtgewicht der vollständigen Mikroemulsion, in die Mischvorrichtung;
- Einspeisen von Wasser in einer Menge von 4,0 bis 40,0 Gew.-%, bezogen auf das Gesamtgewicht der endgültigen Mikroemulsion, in die Mischvorrichtung;
- Versorgen eines Mischbehälters mit einer in der Mischvorrichtung erhaltenen Charge, wobei die Charge das schwere Heizöl oder die Mischung, die hauptsächlich schweres Heizöl enthält, die emulgierende Zusammensetzung und das Wasser umfasst.

10. Verfahren nach Anspruch 9, ferner umfassend
- Rezirkulieren der Charge in dem Mischbehälter durch eine Rezirkulierungsleitung;
- Entladen der Brennstoffmikroemulsionscharge.

11. Verfahren nach Anspruch 10 oder 11, ferner umfassend das Rezirkluieren der Brennstoffmikroemulsionscharge in dem Speicherbehälter durch eine zusätzliche Rezirkulierungsleitung.

12. Verwendung der Mikroemulsion nach Anspruch 6 als Brennstoff, bevorzugt als Brennstoff für Industriekessel und/oder andere Direktheizungsanwendungen sowie für Stationärmotoren für schweres Heizöl

## Revendications

1. Composition émulsifiante comprenant :
(i) au moins un ester à base de saccharide sous une concentration de 30,0 % à 50,0 % du poids de la composition,
(ii) au moins un tensioactif sous la concentration de 2,0 % à 5,0 % du poids de la composition, et
(iiia) au moins un peroxyde ou (IIIb) un mélange d'hydrocarbures terpéniques sous la concentration de 2,0 % à 7,0 % du poids de la composition
l'ester à base de saccharide étant sélectionné parmi : les gallotannins, l'acide tannique, la gomme d'eucalyptus et la saponine ; préférablement étant l'acide tannique.

2. Composition émulsifiante selon la revendication 1, ledit tensioactif étant un tensioactif non ionique, préférablement un tensioactif lipophile non ionique, plus préférablement étant le monostéarate de sorbitan.

3. Composition émulsifiante selon la revendication 1 ou 2 comprenant en outre un tensioactif anionique, préférablement l'acide dodécanoïque.

4. Composition émulsifiante selon l'une quelconque des revendications précédentes comprenant
(i) de l'acide tannique sous une concentration de 30,0 à 50,0 %, préférablement de 38,0 % à 47,0 % du poids de la composition,
(ii) du monostéarate de sorbitan sous la concentration de 2,0 % à 4,0 %, préférablement de 2,5 % à 3,1 % du poids de la composition, et l'acide dodécanoïque sous la concentration de 0,5 % à 1,5 %, préférablement de 0,8 % à 1,2 % du poids de la composition, et
(iiia) du peroxyde d'hydrogène à 50 % en volume sous la concentration de 2,5 à 3,5 %, préférablement de 3,0 % du poids de la composition et du peroxyde de di-tert-butyle sous la concentration de 0,3 % à 2,5 %, préférablement de 0,5 % à 2,0 % du poids de la composition.

5. Composition émulsifiante selon l'une quelconque des revendications précédentes comprenant en outre
(iv) au moins un agent antigel, préférablement de l'éthylène glycol, sous la concentration d'environ 20 % du poids de la composition
(v) au moins un accélérateur octane, préférablement le nitrate d'ammonium, sous la concentration de 0,5 % à 0,9 % du poids de la composition,
(vi) au moins un thiol, préférablement l'éthanethiol, sous la concentration de 1,5 % à 3,0 % du poids de la composition,
et/ou
(vii) un conservateur, préférablement du glutaraldéhyde, sous la concentration de 0,05 à 0,1 % du poids de la composition.

6. Microémulsion comprenant
a) de 4,0 à 40,0 % en poids d'eau,
b) la composition émulsifiante selon la revendication 1, préférablement en quantité d'au plus 1,1 % en poids, et
c) du mazout lourd pour lui faire atteindre 100 %.

7. Microémulsion selon la revendication 6 comprenant au moins 4,0 %, préférablement au moins 8,0 %, plus préférablement au moins 10,0 % en poids d'eau ; comprenant au plus 40,0 %, préférablement au plus 25,0 %, plus préférablement au plus 22,0 % en poids d'eau ; préférablement, comprenant de 4,0 à 40,0 %, plus préférablement de 8,0 à 22,0 % d'eau par rapport au poids total de la microémulsion finale.

8. Microémulsion selon la revendication 6 ou 7 comprenant au moins 0,4 %, préférablement au moins 0,6 %, au moins 0,8 % en poids de la composition émulsifiante (b) ; comprenant au plus 1,1 %, préférablement au plus 1 % en poids de la composition émulsifiante (b) ; comprenant de 0,4 à 1,1 % en poids de la composition émulsifiante (b), préférablement comprenant de 0,8 à 1,0 % en poids de la composition émulsifiante (b).

9. Procédé de fabrication d'une microémulsion selon la revendication 6 comprenant :
- l'alimentation de mazout lourd en quantité de 96,0 à 60,0 % en poids par rapport au poids total de la microémulsion finale dans un dispositif de mélange ;
- l'alimentation de la composition émulsifiante telle que définie selon la revendication 1, préférablement en quantité d'au plus 1,1 % en poids par rapport au poids total de la microémulsion finale, dans ledit dispositif de mélange ;
- l'alimentation d'eau en quantité de 4,0 à 40,0 % en poids par rapport au poids total de la microémulsion finale dans ledit dispositif de mélange ;
- l'alimentation d'une cuve de mélange avec un lot obtenu dans ledit dispositif de mélange, le lot comprenant ledit mazout lourd ou ledit mélange contenant principalement le mazout lourd, ladite composition émulsifiante et ladite eau.

10. Procédé selon la revendication 9 comprenant en outre
- la recirculation du lot dans la cuve de mélange à travers un conduit de recirculation ;
- la décharge du lot de microémulsion combustible.

11. Procédé selon la revendication 9 ou 10 comprenant en outre la recirculation du lot de microémulsion combustible dans la cuve de stockage à travers un conduit de recirculation additionnel.

12. Utilisation de la microémulsion selon la revendication 6, comme combustible préférablement comme combustible pour chaudières industrielles et autres applications de chauffage en source directe ainsi que pour les moteurs stationnaires à mazout lourd.
